(19) Europäisches Patentamt / European Patent Office / Office européen des brevets

(11) **EP 3 482 156 B1**

(12) **EUROPÄISCHE PATENTSCHRIFT**

(45) Veröffentlichungstag und Bekanntmachung des Hinweises auf die Patenterteilung:
**22.09.2021   Patentblatt 2021/38**

(21) Anmeldenummer: **18762452.3**

(22) Anmeldetag: **14.08.2018**

(51) Int Cl.:
**G01B 15/02** *(2006.01)*

(86) Internationale Anmeldenummer:
**PCT/EP2018/071992**

(87) Internationale Veröffentlichungsnummer:
**WO 2019/063185 (04.04.2019 Gazette 2019/14)**

(54) **VORRICHTUNG ZUR DICKENMESSUNG VON BESCHICHTUNGEN**

DEVICE FOR MEASURING THE THICKNESS OF COATINGS

DISPOSITIF POUR LA MESURE DE L'ÉPAISSEUR DE REVÊTEMENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2017   DE 102017122406**

(43) Veröffentlichungstag der Anmeldung:
**15.05.2019   Patentblatt 2019/20**

(73) Patentinhaber: **MICRO-EPSILON Messtechnik GmbH & Co. KG**
**94496 Ortenburg (DE)**

(72) Erfinder:
• **ZIEP, Christian**
  **39326 Wolmirstedt, OT Glindenberg (DE)**
• **RICHTER, Maik**
  **39114 Magdeburg (DE)**
• **HINKEN, Johann**
  **39114 Magdeburg (DE)**

(74) Vertreter: **Becker & Kurig Partnerschaft Patentanwälte PartmbB**
**Bavariastraße 7**
**80336 München (DE)**

(56) Entgegenhaltungen:
EP-A1- 2 620 741      DE-U1-202009 012 483
JP-A- 2009 278 346      US-A1- 2009 278 552

• **HERBERT L THAL: "Cylindrical TE011/ TM111 Mode Control by Cavity Shaping", IEEE TRANSACTIONS ON MICROWAVE THEORY AND TECHNIQUES, PLENUM, USA, Bd. MTT-27, Nr. 12, 1. Dezember 1979 (1979-12-01), Seiten 982-986, XP001366816, ISSN: 0018-9480**

## Beschreibung

### Gebiet der Erfindung

Die vorliegende Erfindung betrifft eine Messvorrichtung zur Bestimmung der Dicke von dielektrischen Schichten, z.B. einem Anstrich oder einer Lackierung, auf einem leitfähigen Substrat mittels hochfrequenter elektromagnetischer Felder in einem Resonanzhohlraum.

### Stand der Technik

Bei vielen industriellen Anwendungen, z.B. im Flugzeug- oder Kraftfahrzeugbau, ist es notwendig, die Dicke von auf ein leitfähiges Grundmaterial bzw. Substrat aufgetragenen dielektrischen Schichten, die z.B. Korrosion oder Luftwiderstand verringern oder dekorativen Zwecken dienen, genau zu bestimmen. Gerade im Luftfahrtbereich kommen sicherheitsrelevante Aspekte bezüglich der Blitzschutzeigenschaften hinzu, welche eine genaue Kenntnis der Schichtdicke erfordern, insbesondere auf kohlefaserverstärktem Kunststoff (CFK), bei dem andere Messverfahren kaum sinnvoll anwendbar sind. Die Dickenmessung soll zerstörungsfrei stattfinden. Mögliche Grundmaterialien sind Metalle, kohlefaserverstärkter Kunststoff (CFK) oder kohlefaserverstärkter Kunststoff (CFK) mit Blitzschutz (Expanded Copper Foil (ECF) oder Metallischen Gittern (Mesh)).

Aus dem Stand der Technik, z.B. EP 2620741 A1, ist hierfür eine Dickenbestimmung mittels eines auf einer Seite offenen zylindrischen Hohlraumresonators im Mikrowellenbereich bekannt, wobei die von der Geometrie abhängige Resonanzfrequenz einer bestimmten Eigenschwingung ausgewertet wird, um die Länge des Hohlraums, der zusammen mit dem leitfähigen Substrat gebildet wird, und damit eine Schichtdicke zu bestimmen. Typischerweise beträgt die Frequenzänderung eines zylinderförmigen Resonators im Verhältnis zur durch die Schichtdicke bedingten Längenänderung des Hohlraumresonators etwa 0,5 MHz/$\mu$m. Der nutzbare Frequenzbereich ist praktisch eingeschränkt, z.B. auch durch rechtliche Vorgaben. Effektiv ergibt sich hierdurch ein maximaler Messbereich von weniger als 500 $\mu$m innerhalb der zulässigen Frequenzbandbreite. Zwar lässt sich das Verhältnis von Frequenzänderung zu Längenänderung durch eine Änderung der Hohlraumlänge bzw. des Hohlraumdurchmessers in gewissen Grenzen beeinflussen, jedoch sind praktisch viele Randbedingungen zu beachten, die eine Änderung dieses Verhältnisses erschweren, insbesondere konkurrierende Eigenschwingungen.

Das Substrat (Grundmaterial) ist möglicherweise nicht isotrop, z.B. bei einem CFK (mit oder ohne Blitzschutz) wie er im Flugzeugbau verwendet wird; die elektrische Leitfähigkeit kann also von der Richtung abhängig sein. Zylindrische Hohlraumresonatoren weisen zum Teil unterschiedliche Resonanz-Feldkonfigurationen (sogenannte 'Moden') auf, die bei der gleichen Resonanzfrequenz liegen (man spricht von einer 'Entartung') und somit gleichzeitig anregbar und anhand der Frequenz nicht unterscheidbar sind. Dies betrifft insbesondere auch für die Messung relevante Moden. Diese entarteten Moden sind teilweise nicht rotationssymmetrisch, was bei einem nicht isotropen Substrat dazu führt, dass sich das Messergebnis ändert, wenn das Messgerät (um die Achse des Zylinders) gedreht wird, d.h. das Messgerät ist nicht 'verdrehsicher'.

US 2009/0278552 A1 betrifft die Messung von Eigenschaften eines Objekts mittels elektromagnetischer Hochfrequenzstrahlung in einem Resonator; insbesondere werden eine Messung der Dicke einer Metallplatte und eine Messung des Wasserinhalts einer Papiergewebebahn offenbart. JP 2009278346 A und Herbert L. Thal, "Cylindrical TE011/ TM111 Mode Control by Cavity Shaping", IEEE Transactions on Microwave Theory and Techniques, Plenum, USA,. MTT-27, Nr. 12, 1. Dezember 1979, ISSN 0018-9480, Seiten 982-986 beschreiben jeweils eine Modifikation der Form eines zylindrischen Filterhohlraums für hochfrequente elektromagnetische Wellen, um die Entartung der TM111 und TE011 Moden aufzuheben. DE 202009012483 U1 offenbart die Schichtdickenmessung, z.B. einer polymeren Beschichtung, mittels einer Sonde mit einem Außenleiter, der einen Innenleiter mit einer Verdickung umgibt.

Aufgabe der vorliegenden Erfindung ist es, eine Messvorrichtung zur Dickenbestimmung dielektrischer Schichten bereitzustellen, welche die Messgenauigkeit erhöht bzw. den Messbereich vergrößert und gleichzeitig verdrehsicher ist.

### Zusammenfassung der Erfindung

Erfindungsgemäß wird die Aufgabe gelöst durch eine Messvorrichtung zur Bestimmung einer Dicke einer dielektrischen Schicht auf einem elektrisch leitfähigen Substrat, umfassend: einen Resonanzhohlraum für elektromagnetische Felder, der eine rotationssymmetrische Wand und eine Endplatte gegenüber einem offenen Ende aufweist, wobei der Resonanzhohlraum angepasst ist, mit dem offenen Ende auf der dielektrischen Schicht auf dem Substrat platziert zu werden, so dass das Substrat eine Wand des Resonanzhohlraums bildet, wobei in einem Bereich des Resonanzhohlraums (2) der Durchmesser der rotationssymmetrischen Wand (4) größer als der Cut-Off Durchmesser ($d_c$) für zylindrische Hohlwellenleiter bei gegebener Betriebsfrequenz ist; eine Antenne, die angepasst ist, ein elektromagnetisches Feld in dem Resonanzhohlraum anzuregen; ein Reflexionsmessgerät, das mit der Antenne verbunden ist und konfiguriert ist, mindestens eine Eigenschaft des elektromagnetischen Feldes im Resonanzhohlraum zu ermitteln; und eine Auswerteschaltung, die mit dem Reflexionsmessgerät verbunden ist und konfiguriert ist, die Dicke der dielektrischen Schicht aus der ermittelten mindestens einen Eigenschaft des elektromagnetischen Feldes zu bestimmen; wobei ein Durchmesser der rotationssymmetrischen Wand in einer Längsrichtung des Resonanzhohlraums von dem offenen Ende zu der Endplatte variiert. Ein Durchmesser einer Öffnung am offenen Ende ist kleiner als der frequenzabhängige Cut-Off-Durchmesser für zylindrische Hohlwellenleiter bei gegebener Betriebsfrequenz.

Gemäß einem weiteren Aspekt der Messvorrichtung kann die Antenne innerhalb des Resonanzhohlraums angeordnet sein.

Gemäß einem weiteren Aspekt kann die Antenne eine Form aufweisen, die angepasst ist, eine Feldkonfiguration entsprechend einer Mode vom Typ TEOnp, bevorzugt vom Typ TE01p, weiter bevorzugt vom Typ TE011, anzuregen, wobei n und p natürliche Zahlen sind. Gemäß einem weiteren Aspekt kann eine Verbindung von der Antenne mit dem Reflexionsmessgerät ein Filter beinhalten, das die Ausbreitung bestimmter Frequenzen unterdrückt oder unterstützt.

Gemäß einem weiteren Aspekt kann das Filter ein Anpassnetzwerk umfassen, das in koaxialer Bauweise und/oder in Mikrostreifentechnik ausgeführt ist.

Gemäß einem weiteren Aspekt kann das Filter ein Anpassnetzwerk mit einem Innenleiter umfassen, der Abschnitte mit unterschiedlichen Durchmessern aufweist.

Gemäß einem weiteren Aspekt kann die Antenne in ein Keramiksubstrat eingebettet sein.

Gemäß einem weiteren Aspekt kann der gesamte Resonanzhohlraum mit dem Keramiksubstrat gefüllt sein und die rotationssymmetrische Wand und die Endplatte als Metallschichten außen auf das Keramiksubstrat aufgebracht sein.

Gemäß einem weiteren Aspekt kann die Variation des Durchmessers der rotationssymmetrischen Wand 2 so angepasst sein, dass das elektromagnetische Feld eine Feldkonfiguration entsprechend einer Mode vom Typ TEOnp, bevorzugt vom Typ TE01p, weiter bevorzugt vom Typ TE011, aufweist, wobei n und p natürliche Zahlen sind.

Gemäß einem weiteren Aspekt kann der Resonanzhohlraum die Form eines Kegelstumpfes, eines Doppelkegelstumpfes, eines Zylinders kombiniert mit einem Kegelstumpf oder einer Kombination davon aufweisen.

Gemäß einem weiteren Aspekt kann die Form der rotationssymmetrischen Wand durch Rotation einer Kurve höherer Ordnung beschrieben werden, bevorzugt durch einen Abschnitt eines Rotationshyperboloids oder eines Rotationsellipsoids.

Gemäß einem weiteren Aspekt kann die Variation des Durchmessers der rotationssymmetrischen Wand von dem offenen Ende zu der Endplatte stetig, bevorzugt glatt, verlaufen.

Gemäß einem weiteren Aspekt kann der Resonanzhohlraum mit einem Dielektrikum gefüllt sein.

Gemäß einem weiteren Aspekt kann die rotationssymmetrische Wand mit einem Material hoher Leitfähigkeit beschichtet sein, bevorzugt mit Silber, Gold oder Kupfer.

Gemäß einem weiteren Aspekt kann die Messvorrichtung eine Abschirmung für elektromagnetische Strahlung umfassen.

Gemäß einem weiteren Aspekt kann die Messvorrichtung eine dielektrische Abdeckung umfassen, welche die Öffnung am offenen Ende abdeckt.

Gemäß einem weiteren Aspekt kann ein Durchmesser der Endplatte größer als ein Durchmesser einer Öffnung am offenen Ende sein.

Gemäß einem weiteren Aspekt kann der Durchmesser der rotationssymmetrischen Wand von dem offenen Ende in Richtung der Endplatte monoton, bevorzugt streng monoton, zunehmen.

Gemäß einem weiteren Aspekt kann ein Durchmesser der Endplatte kleiner als ein Durchmesser einer Öffnung am offenen Ende sein.

## Kurze Beschreibung der Zeichnung

Im Folgenden werden beispielhafte Ausführungsformen der Erfindung unter Bezug auf die Figuren genauer beschrieben, wobei

Figur 1 ein schematisches Bild des Aufbaus einer erfindungsgemäßen Messvorrichtung in einer Schnittdarstellung zeigt;
Figuren 2A bis 2D Beispiele für bevorzugte Innenkonturen einer rotationssymmetrischen Wand des Resonanzhohlraums zeigen;
Figur 3 eine beispielhafte Innenkontur einer rotationssymmetrischen Wand des Resonanzhohlraums gemäß einer Ausführungsform, die nicht Teil der Erfindung ist, zeigt.
Figur 4 ein Modendiagramm für einen kreiszylindrischen Resonanzhohlraum zeigt;
Figur 5 eine Antenne gemäß einer bevorzugten Ausführungsform zeigt;
Figuren 6A und 6B Beispiele für Ausführungen des Resonanzhohlraums mit gekrümmter Endplatte zeigen;
Figur 7 die Durchmesserverhältnisse des Resonanzhohlraums einer Ausführungsform zeigt;
Figur 8 ein Filter in Form eines Anpassnetzwerks gemäß einer Ausführungsform zeigt; und
Figur 9 eine weitere Ausführungsform der vorliegenden Erfindung zeigt.

## Ausführliche Beschreibung der Erfindung

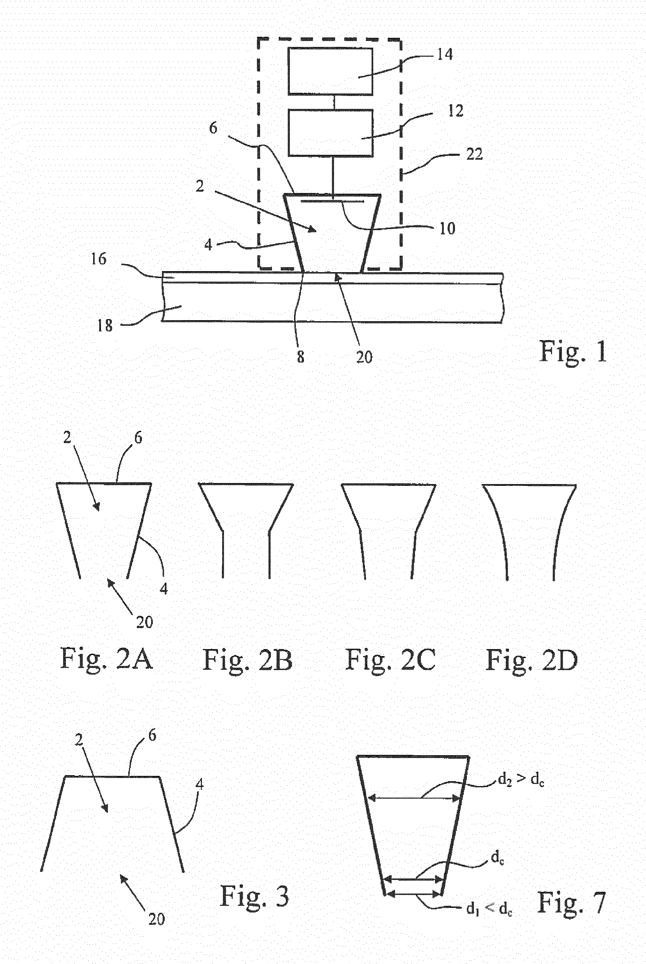

In Fig. 1 ist eine Ausführungsform der erfindungsgemäßen Messvorrichtung in einem Schnitt skizziert. Eine Endplatte 6 (bzw. Endwand) und eine rotationssymmetrische Wand 4 bilden einen an einem Ende 8 offenen Resonanzhohlraum 2 für elektromagnetische (Wellen-) Felder, wobei der Durchmesser der rotationssymmetrischen Wand 6 nicht konstant ist. Die rotationssymmetrische Wand 4 und die Endplatte 6 bestehen aus einem leitfähigen Material (Metall). Der Resonanzhohlraum 2 ist angepasst, mit dem offenen Ende 8, das der Endplatte 6 gegenüberliegt, auf einer dielektrischen Schicht 16, die sich auf einem Substrat 18 aus einem leitfähigen Material befindet und deren Dicke gemessen werden soll, platziert zu werden. Weiter umfasst die Vorrichtung eine Antenne 10, die angepasst ist, ein elektromagnetisches Feld in dem Resonanzhohlraum 2 anzuregen.

Die Endplatte 6 und die rotationssymmetrische Wand 4 sind leitfähig und bilden also zusammen mit dem Substrat 18 einen im Wesentlichen abgeschlossenen Hohlraum (,im Wesentlichen', da sich die dielektrische Schicht zwischen rotationsymmetrischer Wand und Substrat befindet oder auch eine Öffnung für eine Leitungsverbindung der Antenne vorhanden sein kann), in dem durch die Antenne 10 bei geeigneter Frequenz ein stehendes elektromagnetisches Wellenfeld, eine sogenannte Resonanz bzw. Mode, angeregt werden kann. Bevorzugt sind die Messvorrichtung bzw. der Resonanzhohlraum 2 so konfiguriert, dass die Endplatte 6 (im Wesentlichen) parallel zur Grenzfläche zwischen Substrat 18 und dielektrischer Schicht 16 angeordnet ist, wenn die Messvorrichtung auf die Schicht 16 aufgesetzt wird. Anders formuliert ist bevorzugt der Rand einer Öffnung 20 am offenen Ende 8 des Resonanzhohlraums 2 parallel zur Endplatte 6.

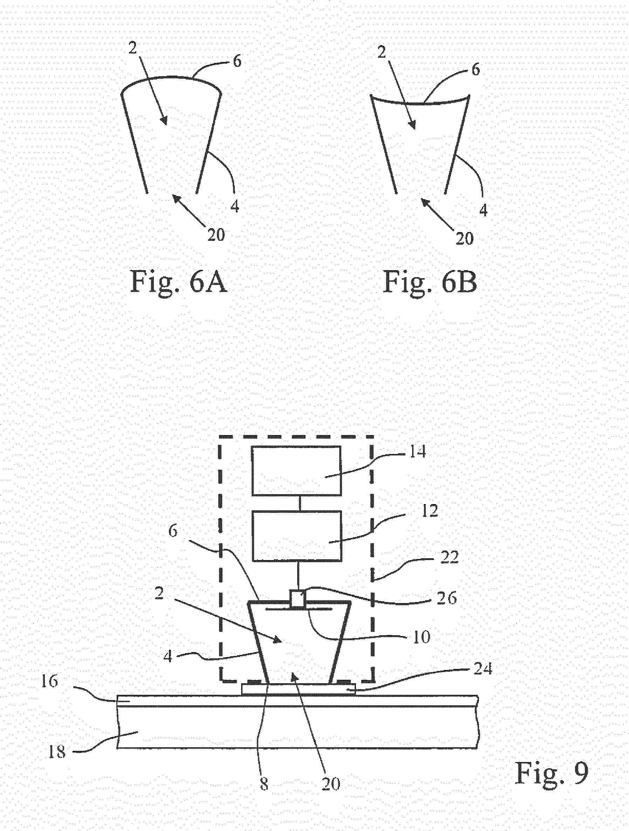

Die Endplatte 6 ist bevorzugt rotationssymmetrisch und besitzt ein Querschnittsprofil, das eben oder gekrümmt sein kann, wobei bevorzugt eine Rotationsachse der Endplatte mit einer Rotationsachse der rotationssymmetrischen Wand zusammenfällt. ,Gekrümmt' bedeutet entweder konkav oder konvex, wobei das Profil einer Kurve höherer Ordnung folgen kann, beispielsweise sphärisch, parabelförmig, hyperbolisch oder elliptisch (vgl. Figuren 6A und 6B).

Eine zum stehenden elektromagnetischen Wellenfeld gehörige Eigenschaft des elektromagnetischen Feldes im Resonanzhohlraum 2 wird ermittelt (gemessen), wobei es auch möglich ist mehr als eine Eigenschaft des elektromagnetischen Feldes zu ermitteln; es wird also mindestens eine Eigenschaft des elektromagnetischen Feldes im Resonanzhohlraum 2 ermittelt. Bevorzugt wird die zum stehenden elektromagnetischen Wellenfeld gehörige Resonanzfrequenz, auch als Eigenfrequenz bezeichnet, durch ein mit der Antenne 10 verbundenes Reflexionsmessgerät 12 ermittelt bzw. gemessen. Hierzu wird durch die Antenne eine elektromagnetische Welle in den Resonanzhohlraum eingekoppelt, wobei ein bestimmter Frequenzbereich überstrichen wird. Tritt eine Resonanz auf, so macht sich dies durch einen Abfall der am Reflexionsmessgerät gemessenen Leistung bemerkbar, so dass die Resonanz und die zughörige mindestens eine Eigenschaft des elektromagnetischen Feldes, z.B. die Resonanzfrequenz, bestimmt werden können. Im Folgenden wird die Erfindung größtenteils anhand der Messung der Resonanzfrequenz erläutert; wird eine andere Eigenschaft des elektromagnetischen Feldes zur Messung verwendet, so ist dem Fachmann klar, wie die technischen Details anzupassen sind. Beispiele für weitere nutzbare Eigenschaften sind Amplitude, Realteil, Imaginärteil und entsprechende Ableitungen des reflektierten Signals.

Die ermittelte mindestens eine Eigenschaft des elektromagnetischen Feldes, insbesondere Resonanzfrequenz, wird dann von einer mit dem Reflexionsmessgerät 12 verbundenen digitalen oder analogen Auswerteschaltung 14 (bzw. Auswertevorrichtung), z.B. einem Prozessor oder einer Analogschaltung, verwendet, um die Dicke der dielektrischen Schicht 16 zu bestimmen, was möglich ist, da die mindestens eine Eigenschaft des elektromagnetischen Feldes, insbesondere die Resonanzfrequenz, von der Geometrie des Resonanzhohlraumes 2, insbesondere vom Abstand von Endplatte 6 und Substrat 18, abhängig ist.

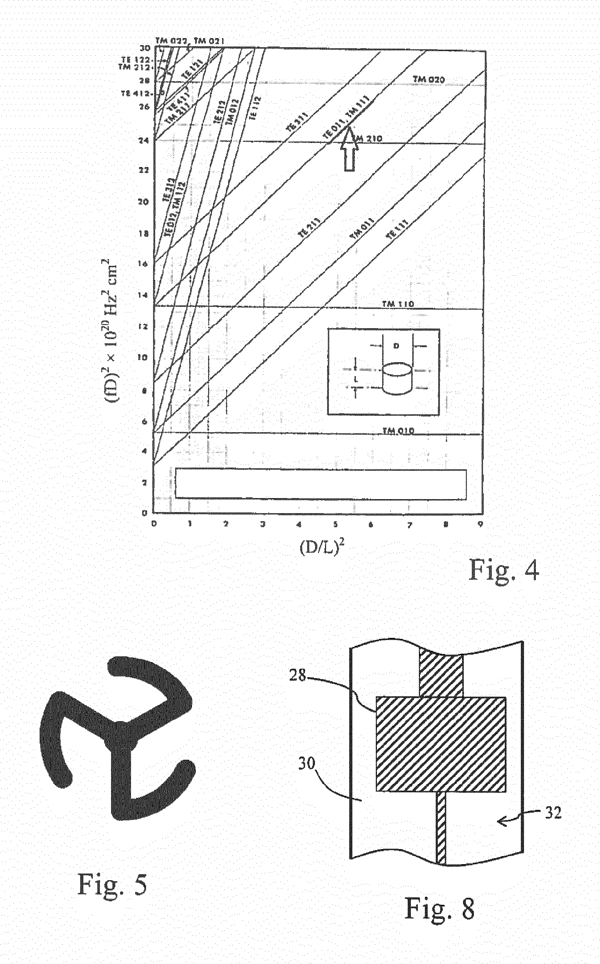

Der (Innen-)Durchmesser der rotationssymmetrischen Wand 4 variiert in einer Längsrichtung, die sich von dem offenen Ende 8 in Richtung der Endplatte 6 erstreckt, die also mit der Rotationsachse der rotationssymmetrischen Wand 4 übereinstimmt. Diese Variation des Durchmessers führt dazu, dass die sogenannte Entartung unterschiedlicher Feldkonfigurationen, die im Falle einer zylindrischen Wand die gleiche Resonanzfrequenz aufweisen, aufgehoben wird. Fig. 4 zeigt, am Beispiel des zylindrischen Resonators, dass einige Moden gleiche Resonanzfrequenzen aufweisen. Bei Verwendung der hier forcierten Hohlraumgeometrien, Fig. 2 und Fig. 3, unterscheiden sich die Resonanzfrequenzen dieser Moden.

,Rotationssymmetrische Wand' bezieht sich auf die Form der Wand aus Sicht des Resonanzhohlraums. Genaugenommen ist damit eine rotationssymmetrische Innenoberfläche bzw. Innenkontur der Wand gemeint, die hier physikalisch für die Bildung elektromagnetischer Wellenfelder relevant ist (da an den Grenzflächen Randbedingungen vorgegeben sind). 'Rotationssymmetrisch' ist so zu verstehen, dass in einem radialen Schnitt, d.h. Schnittebene senkrecht zur Längsrichtung bzw. Rotationsachse, die rotationssymmetrische Wand, genauer deren Innenkontur, kreisförmig ist. Anders formuliert bildet der Resonanzhohlraum einen Rotationskörper. Die Durchmesservariation bedeutet eine Variation der Durchmesser dieser radialen Schnittkreise in Längsrichtung. Die äußere Kontur der Wand ist davon unabhängig, sie muss also nicht der Innenkontur folgen, eine Dicke der rotationssymmetrischen Wand kann also variieren. Außer einer Wand mit konstanter Dicke, bei der die äußere Kontur gleich der inneren ist, ist also auch eine beliebige andere äußere Form möglich, z.B. eine Zylinderform mit konstantem (äußeren) Durchmesser oder eine Form, die Vorsprünge zur Befestigung an einem Gehäuse aufweist. Dies gilt analog für die Endplatte, die bevorzugt einstückig mit der rotationssymmetrischen Wand gebildet ist. Möglich ist auch eine zwei- oder mehrstückige Ausführung, bei der die Endplatte und die rotationssymmetrische Wand getrennte Bauteile sind, die aneinander befestigt werden.

Als Material für die rotationssymmetrische Wand 4 und die Endplatte 6 wird bevorzugt ein Metall mit geringem Wärmeausdehnungskoeffizienten verwendet, um eine Temperaturabhängigkeit des Messergebnisses möglichst klein zu halten. Die Innenoberfläche von ebener und/oder rotationssymmetrischer Wand ist bevorzugt mit einem Material hoher Leitfähigkeit beschichtet, z.B. Silber, Gold oder Kupfer. Damit wird ein hoher Gütefaktor der Resonanz, der von ohmschen Verlusten in den Wände abhängig ist, erreicht und somit die Messgenauigkeit verbessert, da die Resonanzfrequenz und entsprechend die zur Messung verwendete mindestens eine Eigenschaft des elektromagnetischen Feldes genauer bestimmt werden kann. Als Gütefaktor wird wie üblich das Verhältnis einer Breite der Resonanz zu der Resonanzfrequenz bezeichnet.

Die Antenne 10 befindet sich bevorzugt innerhalb des Resonanzhohlraums 2. Befindet sich die Antenne 10 im Inneren des Resonanzhohlraums 2, so verläuft die Verbindung zwischen Antenne 10 und Reflexionsmessgerät 12 durch eine kleine Öffnung in den Wänden des Resonanzhohlraums, die sich bevorzugt in der Endplatte 6 befindet.

In der Verbindung zwischen Antenne 10 und Reflexionsmessgerät 12 kann weiterhin ein Filter angeordnet sein, welches die Ausbreitung bestimmter Frequenzen unterdrückt oder unterstützt. Das Filter kann ein Anpassnetzwerk (Anpassungsnetzwerk) 26 umfassen oder kann in Form eines Anpassnetzwerks 26 ausgeführt sein, vgl. Fig. 9 zur allgemeinen Anordnung des Filters bzw. Anpassnetzwerks 26. Bevorzugt ist das Anpassnetzwerk mit oder in der Antenne integriert.

Das Anpassnetzwerk 26 wirkt als Bandpassfilter im Bereich des Nutzfrequenzbandes und erhöht den Gütefaktor des Messsignales. Es ist so dimensioniert, dass eine gute Impedanz-Anpassung des Reflexionsmessgerätes 12 an den Resonanzhohlraum 2 mit Antenne 10 im Zusammenhang mit der verwendeten Eigenschwingung erreicht wird.

Das Anpassnetzwerk kann z.B. in koaxialer Bauweise und/oder in Mikrostreifentechnik ausgeführt sein. Eine beispielhafte Ausführungsform des Anpassnetzwerks in koaxialer Bauform ist in Fig. 8 in einem axialen Schnitt dargestellt. In dieser Ausführungsform ist das Anpassnetzwerk in einem Innenleiter 28 integriert, wobei der Innenleiter unterschiedliche Durchmesser aufweist, d.h. in Längs- bzw. Achsrichtung weist der Innenleiter Abschnitte mit unterschiedlichen Durchmessern auf. Durch die unterschiedlichen Durchmesser des Innenleiters kann die Ausbreitung bestimmter Frequenzen unterdrückt oder verstärkt werden. Besonders günstig ist, wenn das Anpassnetzwerk auf die Mittenfrequenz des Nutzfrequenzbandes optimiert ist. Das Anpassnetzwerk 26 kann weiterhin einen Außenleiter 30 und ein Dielektrikum 32 zwischen Innen- und Außenleiter umfassen, wie in Fig. 8 dargestellt.

Das Reflexionsmessgerät 12 ist konfiguriert, die mindestens eine Eigenschaft des elektromagnetischen Feldes im Resonanzhohlraum, insbesondere eine Resonanzfrequenz des Resonanzhohlraums 2, zu messen. D.h. neben einem eigentlichen Reflexions-Leistungs-Messgerät kann das Reflexionsmessgerät 12 eine Ansteuerschaltung und/oder eine Leistungsschaltung für die Antenne 10 (die mit dem Reflexionsmessgerät verbunden ist) umfassen. Weiter kann das Reflexionsmessgerät 12 eine Logikschaltung umfassen, die konfiguriert ist, das Auftreten einer Resonanz zu erkennen und, gegebenenfalls, über die Ansteuerschaltung die Antenne zu steuern, insbesondere die Frequenz. Das Reflexionsmessgerät umfasst eine Auswerteelektronik, um einen Reflexionsfaktor der Antenne zu bestimmen und daraus das Auftreten einer Resonanz zu erkennen.

Die Berechnung durch die Auswerteschaltung 14 kann auf einer Modellierung des Resonanzhohlraums und zughöriger Eigenschaften elektromagnetischer Felder im Resonanzhohlraum (insbesondere deren Resonanzfrequenzen), z.B. mittels einer Finiten-Elemente-Methode, und/oder auf einer Kalibrierung mittels Schichten bekannter Dicke, z.B. Folien, basieren, wobei Dicken zwischen Kalibrierungspunkten in geeigneter Weise interpoliert werden. Zum Speichern der notwendigen Daten und einer Betriebs-Software kann die Auswerteschaltung mit einem Speicher verbunden sein, der z.B. integriert mit der Auswerteschaltung sein kann oder auch von diesem getrennt sein kann. Weiter kann die Messvorrichtung, insbesondere die Auswerteschaltung 14, mit einer Kommunikationsschnittstelle ausgestattet sein, die es ermöglicht, Daten mit anderen Geräten, z.B. einem Computer oder einem Mobilgerät, auszutauschen. Auf diese Weise können einerseits Daten, insbesondere Messergebnisse, von der Messvorrichtung an andere Geräte weitergegeben werden und andererseits Betriebs-Software und zum Betrieb notwendige Daten im mit der Auswerteschaltung verbundenen Speicher aktualisiert werden. Ein Anwendungsbeispiel für Letzteres wäre es, die Dielektrizitätskonstante einer zu vermessenden Schicht an die Auswerteschaltung zu übermitteln, um die Messgenauigkeit zu erhöhen. Als Kommunikationsschnittstelle kommen bekannte drahtgebundene parallele oder serielle Schnittstellen (z.B. USB) oder drahtlose Schnittstellen (z.B. WLAN, Bluetooth) in Frage.

Standardmäßig ist der Resonanzhohlraum 2 mit Luft gefüllt, er kann jedoch auch mit einem Dielektrikum gefüllt sein. Hierdurch verringern sich bei gegebener Resonanzfrequenz die Abmaße des Resonanzhohlraums um den Faktor $\sqrt{\varepsilon_r}$, wobei $\varepsilon_r = \varepsilon/\varepsilon_0$ die relative Dielektrizitätskonstante (Permittivität) des Dielektrikums ist; $\varepsilon$ ist die Dielektrizitätskonstante des Dielektrikums, $\varepsilon_0$ diejenige des Vakuums. Auch Luft ist ein Dielektrikum, allerdings ist hier $\varepsilon_r$ sehr nahe bei eins ($\varepsilon_r = 1{,}00059$). Eine vorhandene Abhängigkeit der Dielektrizitätskonstante von Parametern wie Temperatur oder Frequenz ist gegebenenfalls zu berücksichtigen, um ein genaues Messergebnis zu gewährleisten.

Eine weitere Ausführungsform des Resonanzhohlraums 2 besteht darin, die, bevorzugt innerhalb des Resonanzhohlraums angeordnete, Antenne 10 in ein Keramiksubstrat (d.h. einen keramischen Volumenkörper) einzubetten, wobei bevorzugt der gesamte Resonanzhohlraum mit dem Keramiksubstrat gefüllt ist. Beispielsweise kann durch Verwendung mehrlagiger Keramiksubstrate die Antenne 10 in das Keramiksubstrat eingebettet werden. Durch Aufbringen einer Metallisierung außen auf dem Substrat kann der Resonator gebildet werden, wobei das offene Ende 8 frei von der Metallisierung bleibt; die rotationssymmetrische Wand 4 und die Endplatte 6 sind so als Metallschicht(en) außen auf dem Keramiksubstrat gebildet. Das mehrlagige Keramiksubstrat wird so aufgebaut, dass die äußere Form der Form des Resonanzhohlraums entspricht. Eine bevorzugte Ausführung ist in LTCC (Low Temperature Cofired Ceramics, Niedertemperatur-Einbrand-Keramiken) oder HTCC (High Temperature Cofired Ceramics, Hochtemperatur-Mehrlagenkeramik), welche im Hochtemperaturbereich Anwendung finden. Das Keramiksubstrat dient gleichzeitig als Dielektrikum. Insgesamt wird so ein sehr kompakter, kleiner Aufbau des Resonanzhohlraums und damit der Messvorrichtung ermöglicht, da (bei gegebener Betriebsfrequenz) die Abmessungen des Resonanzhohlraums aufgrund des als Dielektrikum dienenden Keramiksubstrats verkleinert werden und außerdem die rotationssymmetrische Wand und die Endplatte als Metallschichten relativ dünn sind, wobei sie durch das Keramiksubstrat gestützt werden.

Weiter kann die Messvorrichtung ein Gehäuse 22 umfassen (in Fig. 1 mittels einer gestrichelten Linie angedeutet), in dem sich zumindest der Resonanzhohlraum 2 befindet. Im Gehäuse können auch das Reflexionsmessgerät 12 und/oder die Auswerteschaltung 14 mit aufgenommen sein. Das Gehäuse 22 kann aus einem Metall sein und gleichzeitig als Abschirmung dienen, um die Abstrahlung elektromagnetischer Felder während des Betriebs zu verhindern. Außer der mit dem Gehäuse 22 integrierten Abschirmung kann auch eine gesonderte Abschirmung vorgesehen sein.

Weiterhin kann der Resonanzhohlraum 2 mit einer dielektrischen Abdeckung 24 versehen werden, d.h. die Öffnung 20 wird durch eine Schicht aus einem dielektrischen Material abgedeckt, so dass eine Schutzschicht bzw. Schutzfolie gebildet wird; vgl. Fig. 9. Diese schützt das Innere des Resonanzhohlraums 2 vor umweltbedingten Einflüssen, insbesondere gegen das Eindringen von metallischen oder dielektrischen Verunreinigungen, die die Messung beeinflussen können. Weiterhin wird das Messobjekt vor Beschädigungen durch Kontakt mit dem metallischen Resonator geschützt. Bevorzugte Ausführungsformen der dielektrischen Abdeckung 24 sind Keramiken oder Kunststoffe, welche z.B. auch faserverstärkt sein können.

Für den Betrieb der Messvorrichtung kommen prinzipiell Frequenzen im Bereich von etwa 1 GHz bis etwa 100 GHz in Frage. Der Betrieb von Hochfrequenzgeräten unterliegt jedoch rechtlichen Beschränkungen, die dem Fachmann bekannt sind. Für industrielle Anwendungen sind die ISM-Bänder (‚ISM': Industrial, Scientific and Medical) vorgesehen. Bevorzugt wird der Frequenzbereich von 24,0 - 24,25 GHz verwendet; die Betriebsfrequenz beträgt also bevorzugt 24,0 - 24,25 GHz. Der Messbereich der Messvorrichtung (Messbereich im Sinne von Bereich bzw. Abstand zwischen minimaler und maximaler messbarer Dicke) wird durch die Form des Hohlraumresonators vorgegeben. Abgesehen von rechtlichen Vorgaben wird der Frequenzbereich natürlich auch durch technische Gegebenheiten (Frequenzerzeugung, Auswerteelektronik, ...) bestimmt.

In den Figuren 2A bis 2D sind verschiedene bevorzugte Ausführungen der Form des Resonanzhohlraums 2 jeweils in einem axialen Schnitt (d.h. die Rotationsachse liegt in der Schnittebene) dargestellt. Der Übersichtlichkeit wegen sind Bezugszeichen nur in Fig. 2A eingetragen, diese gelten entsprechend für Fig. 2B - Fig. 2D. Die Ausführungsformen unterscheiden sich in der jeweiligen Formgebung der rotationssymmetrischen Wand 4.

In Fig. 2A hat die rotationssymmetrische Wand 4 die Gestalt einer Kegelstumpfmantelfläche und entsprechend hat der Resonanzhohlraum 2 die Form eines Kegelstumpfes bzw. eines Konus.

In Fig. 2B weist der Resonanzhohlraum 2 die Form eines Zylinders kombiniert mit einem Kegelstumpf auf. Die rotationssymmetrische Wand weist entsprechend die Gestalt einer Zylindermantelfläche kombiniert mit einer Kegelstumpfmantelfläche auf. Der Zylinder ist am Ende des Kegelstumpfes mit dem kleineren Durchmesser angebracht. Selbstverständlich kann der Zylinder auch das Ende des Kegelstumpfes mit dem größeren Durchmesser verlängern.

In Fig. 2C sind zwei Kegelstumpfmantelflächen mit unterschiedlichem Winkel zwischen den jeweiligen Mantelflächen und der Rotationsachse aneinander gereiht. Der Resonanzhohlraum 2 weist also die Form zweier aneinander gereihter Kegelstümpfe mit unterschiedlichen Öffnungswinkeln auf.

In Fig. 2D ist eine trompetenförmige Ausführung dargestellt, die rotationssymmetrische Wand entsteht z.B. durch Rotation eines Teilabschnitts einer Hyperbel oder Ellipse, allgemeiner durch Rotation einer Kurve höherer Ordnung.

Diese Ausführungen sollen lediglich als Beispiele dienen. Selbstverständlich sind auch beliebige andere Formen des Resonanzhohlraums 2 und der rotationssymmetrischen Wand 4 möglich. Insbesondere ist es möglich, mehrere der gezeigten Basisformen, d.h. Kegelstumpf, Zylinder und gekrümmte bzw. trompetenförmige Form, als Teilstücke zu verwenden und in beliebiger Reihenfolge zu kombinieren. Ist ein stetiger Verlauf des Durchmessers der rotationssymmetrischen Wand 4 in Längsrichtung erwünscht, so sind die Durchmesser an den Enden der Teilstücke jeweils an den Durchmesser des benachbarten Teilstücks anzupassen. Auf diese Weise kann eine Vielzahl von Durchmesservariationen und entsprechender Resonanzhohlräume 2 erhalten werden, z.B. auch Formen, bei denen der Resonanzhohlraum eine Ausbuchtung aufweist.

Falls die Endplatte 6 nicht eben ist, sind die hier verwendeten Begriffe 'Kegelstumpf' und 'Zylinder' so zu verstehen, dass diejenige (eigentlich ebene) Endfläche des Kegelstumpfes bzw. Zylinders, die mit der Endplatte zusammenfällt, gekrümmt ist, also nicht eben ist. Der Resonanzhohlraum weist in diesem Fall die Form eines Kegelstumpfes, eines Zylinders oder einer Kombination davon nur im Wesentlichen, d.h. mit Ausnahme der Endfläche die mit der Endplatte zusammenfällt, auf.

Bevorzugt verläuft die Variation des Durchmessers der rotationssymmetrischen Wand 4 in Längsrichtung von dem offenen Ende in Richtung der Endplatte 6 stetig, wobei die Variation weiter bevorzugt glatt ist. 'Stetige Variation' bedeutet, dass keine Sprünge in der Durchmesservariation vorhanden sind, bzw. dass sich keine Stufen in der Wand befinden. Weitergehend kann gefordert sein, dass keine (kreisförmigen) Kanten in der Wand vorhanden sind, was durch einen glatten Verlauf der Variation sichergestellt ist. 'Glatt' heißt also, dass in einem geeigneten Koordinatensystem, in dem der Durchmesser gegen die Längsrichtung aufgetragen ist, die erste Ableitung der entstehenden Kurve stetig ist. Durch eine glatte Ausführung kann insbesondere die Güte der Resonanz verbessert werden.

Wie in den Figuren 2A - 2D dargestellt, ist ein Durchmesser der Endplatte 6 bevorzugt größer als der Durchmesser der Öffnung 20 am offenen Ende 8 des Resonanzhohlraums 2. Diese Durchmesserzunahme verläuft bevorzugt monoton, weiter bevorzugt streng monoton, in der Längsrichtung ausgehend von der Öffnung 20 am offenen Ende 8 zu der Endplatte 6. Der Durchmesser der rotationssymmetrischen Wand 4 nimmt also monoton (zunehmend mit eventuellen Abschnitten konstanten Durchmessers) bzw. streng monoton (durchgehend zunehmend) zu. Dadurch wird der Resonanzhohlraum 2 nicht in Teilhohlräume unterteilt, die durch eine Stelle mit kleinerem Durchmesser getrennt sind.

Entsprechend diesen Bezeichnungsweisen ist die Durchmesservariation in Fig. 2A glatt und streng monoton, in Fig. 2B stetig und monoton, in Fig. 2C stetig und streng monoton und in Fig. 2D glatt und streng monoton.

Gemäß einer alternativen Ausführungsform ist ein Durchmesser der Endplatte 6 kleiner als der Durchmesser der Öffnung 20 am offenen Ende 8 des Resonanzhohlraums 2. In einer Ausführungsform, die nicht Teil der Erfindung ist, nimmt der Durchmesser der rotationsförmigen Wand 4 ausgehend von der Öffnung 20 in Richtung der Endplatte monoton, bzw. streng monoton ab. Beispielhaft ist dies in Fig. 3 gezeigt, in der der Resonanzhohlraum 2 die Form eines Kegelstumpfes aufweist, dessen größeres Ende mit der Öffnung 20 am offenen Ende 8 und dessen kleineres Ende mit der Endplatte 6 zusammenfällt. Ähnlich wie in den Figuren 2B - 2D sind auch hier andere Formen möglich, z.B. Kegelstümpfe mit unterschiedlichem Öffnungswinkel, eine Zylinderform oder eine gekrümmte Form, oder Kombinationen davon.

Die Nomenklatur unterschiedlicher elektromagnetischer Feldkonfigurationen, als Moden bezeichnet, ist an die wohlbekannte bei kreiszylindrischen Wellenleitern angelehnt. Es wird zwischen transversal magnetischen TM-Wellen, d.h. elektrisches Feld in Ausbreitungsrichtung, und transversal elektrischen TE-Wellen, d.h. magnetisches Feld in Ausbreitungsrichtung, unterschieden. Diese werden weiter durch zwei natürliche Zahlen (0, 1, 2, ...) m und n charakterisiert, die die Anzahl, m, ganzer Wellenlängen in Umfangsrichtung und die Anzahl, n, halber Wellenlängen in radialer Richtung ausdrücken. Wird der zylindrische Hohlleiter an beiden Enden durch ebene Leiter abschlossen, erhält man durch Reflexion im Resonanzfall stehende Wellen, wobei eine weitere natürliche Zahl p die Anzahl halber Wellen in Längsrichtung ausdrückt. Insgesamt hat man also Moden vom Typ TMmnp und vom Typ TEmnp. Aufgrund physikalischer Randbedingungen sind nicht alle beliebigen Kombinationen dieser drei Zahlen möglich. Da der Resonanzhohlraum 2 nicht sehr stark von einer (Kreis-)Zylinderform abweicht, insbesondere bleibt die Rotationssymmetrie erhalten, kann diese Bezeichnungsweise weiterhin verwendet werden (bei Moden niedriger Ordnung und kleinen Konuswinkeln).

Fig. 4 zeigt ein Modendiagramm für einen kreiszylindrischen Resonanzhohlraum mit einem Durchmesser D und einer Länge L. Im Diagramm ist das Quadrat des Produkts von Resonanzfrequenz f und Durchmesser D gegen das Quadrat des Quotienten von Durchmesser D und Länge L für einige Moden aufgetragen. Hierbei ist zu erkennen, dass sich die Resonanzfrequenz f, mit Ausnahme der Moden mit Index TMmn0 (also TM010, TM110, TM210 im Diagramm), bei gegebenen Durchmesser D mit sich ändernder Länge L ändert. Auf diesem Effekt beruht die Dickenmessung mittels Mikrowellenstrahlung in einem Resonanzhohlraum. Klarerweise sollte die Geometrie, also Durchmesser und Länge, so gewählt werden, dass eine klare Trennung verschiedener (nicht entarteter) Moden möglich ist, da ansonsten verschiedene Moden mit unterschiedlichem Frequenzverhalten bei Längenänderung angeregt werden können und die Zuordnung zwischen Frequenzänderung und Längenänderung nicht mehr möglich ist. Im Gebiet $(D/L)^2 < 1{,}5$ befinden sich z.B. zu viele Eigenfrequenzen verschiedener Moden, so dass dieses Gebiet nicht geeignet ist.

In Fig. 4 ist auch die für Zylinderresonatoren typische Entartung der Moden TE0np und TM1np zu erkennen. 'Entartung' heißt hier, dass verschiedene Moden die gleiche Resonanzfrequenz aufweisen. Beispielhaft ist dies für die Moden TE011 und TM111 mit einem Pfeil gekennzeichnet.

Die Moden TE0np sind für eine Dickenmessung einer dielektrischen Schicht in zweierlei Hinsicht vorteilhaft gegenüber den Moden TMlnp. Zunächst sind die Moden TE0np im Gegensatz zu den Moden TMlnp rotationssymmetrisch. Im Falle eines nicht isotropen Substrats, wie etwa kohlefaserverstärktem Kunststoff (evtl. mit metallischen Einlagen), das möglicherweise eine nicht isotrope Leitfähigkeit aufweist, ist die Messung unter Verwendung einer Mode vom Typ TE0np invariant bei Rotation der Messvorrichtung; die Messvorrichtung ist also verdrehsicher. Zweitens fällt bei einer Mode vom Typ TE0np, anders als bei einer Mode vom Typ TM1np, das elektrische Feld an den beiden Endflächen, insbesondere also innerhalb der zu vermessenden Schicht, schnell auf Null ab, da bei einer TE-Mode das elektrische Feld transversal zur Ausbreitungsrichtung und also parallel zu den leitfähigen Endflächen des Resonators (Substrat, Endplatte) ist und somit dort verschwinden muss. Der Einfluss der Dielektrizitätskonstante der dielektrischen Schicht auf die Messung ist im Falle einer TE0np Mode also gering.

Eine Aufhebung der Entartung, d.h. eine Trennung der Eigenfrequenzen, zwischen den Moden TE0np und TM1np wird durch die erfindungsgemäße Formgebung der rotationssymmetrischen Wand der Messvorrichtung erreicht, also durch die Variation des Durchmessers der rotationssymmetrischen Wand 4 in Längsrichtung, die zu einer modenabhängigen Verschiebung der Resonanzfrequenzen führt. Bevorzugt wird die Mode vom Typ TE0np, bevorzugt vom Typ TE01p, weiter bevorzugt vom Typ TE011, zur Dickenmessung verwendet, die Durchmesservariation der rotationssymmetrischen Wand 4 ist also entsprechend angepasst.

Der Hohlraumresonator muss an mindestens einem der Enden des kreissymmetrischen Resonanzraums einen bestimmten frequenzabhängigen Mindestdurchmesser, als Cut-Off-Durchmesser bezeichnet, aufweisen, damit ein elektromagnetisches Feld der Form z.B. TE0np innerhalb des Nutzfrequenzbereiches anregbar ist (Eigenresonanzbedingung). Im Modendiagramm, Fig. 4, sind die frequenzabhängigen und geometrischen Verhältnisse zur Erfüllung der Eigenresonanzbedingungen unterschiedlicher Moden am Beispiel eines Hohlraumresonators mit zylinderförmiger Seitenwand dargestellt.

Erfindungsgemäß weist die Öffnung 20, die am offenen Ende 8 des Resonanzhohlraums 2 gebildet ist, bei gegebener Betriebsfrequenz der Messvorrichtung einen kleineren Durchmesser auf als den frequenzabhängigen Cut-Off-Durchmesser $d_c$ für zylindrische Hohlleiter. Aufgrund des sogenannten evaneszenten Anteils des elektromagnetischen Wellenfeldes, der über die Öffnung hinausragt, ist eine Dickenbestimmung weiterhin möglich. Klarerweise muss in einem Bereich des Resonanzhohlraums 2, in dem das Feld durch die Antenne 10 angeregt wird und der sich bevorzugt bei der Endplatte 6 befindet, der Durchmesser der rotationssymmetrischen Wand 4 größer als der Cut-Off-Durchmesser $d_c$

sein, damit ein Wellenfeld entstehen kann. Das elektromagnetische Feld auf der gegenüberliegenden Seite mit dem offenen Ende 8 fällt jedoch im Bereich des Cut-Off-Durchmessers nicht sofort auf Null ab, sondern im Allgemeinen exponentiell, dieser Anteil ist der evaneszente Anteil der Wellenfunktion, welcher zur Schichtdickenmessung ausgenutzt wird.

In Fig. 7 ist ein Resonanzhohlraum dargestellt, in dem die entsprechenden Durchmesserverhältnisse der vorstehend beschriebenen Ausführungsform für eine Mode vom Typ TE0np erläuternd eingetragen sind; auf Bezugszeichen wurde hier der Übersichtlichkeit wegen verzichtet (vgl. Fig. 2A für Bezugszeichen). Für die Dimensionierung des Durchmessers $d_1$ der rotationssymmetrischen Wand 4 des offenen Endes 8 gilt:

$$d_1 < \frac{X'_{0n}}{\pi}\lambda$$

Für die Dimensionierung des Durchmessers $d_2$ der rotationssymmetrischen Wand (4) im Bereich der Endplatte 6 gilt:

$$d_2 > \frac{X'_{0n}}{\pi}\lambda$$

wobei $d_{1/2}$ der Durchmesser an der rotationssymmetrischen Wand 4 an der jeweiligen Position ist, $X'_{0n}$ eine Nullstelle der Ableitung der Bessel-Funktion ist, welche die Mode des Typs TE0n in Radialrichtung beschreibt, und $\lambda$ die Freiraumwellenlänge der höchsten Frequenz des genutzten Frequenzbandes ist.

Der Cut-Off-Durchmesser $d_c$ ist gegeben durch:

$$d_c = \frac{X'_{0n}}{\pi}\lambda$$

Diese Formel ist zwar in Strenge für konische Resonatoren nicht anwendbar. Bei konischen (oder allgemein nicht-zylindrischen) Resonatoren mit kleinen Öffnungswinkeln, beispielsweise 12° (halber Öffnungswinkel) ist das Konzept des Cut-Off-Durchmessers $d_c$ jedoch für die Bestimmung der Durchmesser in guter Näherung anwendbar. Bevorzugt liegt der halbe Öffnungswinkel im Bereich von 8° bis 12°.

Es wurde festgestellt, dass dieser kleine Durchmesser der Öffnung 20 darin resultiert, dass die Frequenzänderung bei unterschiedlichen Schichtdicken geringer ausfällt, dass also das Verhältnis (ausgedrückt in MHz/$\mu$m) von Frequenzänderung zu Längenänderung des Resonators (die durch die Dicke der Schicht bedingt ist) kleiner wird und sich dieses Verhältnis gezielt einstellen lässt. Der Messbereich lässt sich demzufolge bei vorgegebenem nutzbaren Frequenzbereich vergrößern und gezielt einstellen; z.B. auf mindestens 500 $\mu$m, bevorzugt auf mindestens 1000 $\mu$m. Der entsprechende Bereich messbarer Schichtdicken muss nicht bei 0 $\mu$m beginnen und sich im Falle eines Messbereichs von beispielsweise 500 $\mu$m oder 1000 $\mu$m von 0 $\mu$m bis 500 $\mu$m bzw. von 0 $\mu$m bis 1000 $\mu$m erstrecken, sondern die Messvorrichtung kann so angepasst sein, dass der Bereich messbarer Schichtdicken bei einer Schichtdicke beginnt, die größer als 0 $\mu$m ist. Beispielsweise, wieder im Falle eines Messbereichs von 500 $\mu$m oder 1000 $\mu$m, von 100 $\mu$m bis 600 $\mu$m bzw. von 100 $\mu$m bis 1100 $\mu$m oder allgemeiner von N $\mu$m bis N+500 $\mu$m bzw. von N $\mu$m bis N+1000 $\mu$m, wobei N eine reelle Zahl größer oder gleich 0 ist. 500 $\mu$m und 1000 $\mu$m wurden beispielhaft verwendet, natürlich sind auch andere Messbereiche möglich.

Umgekehrt wurde festgestellt, dass es durch eine Vergrößerung des Durchmessers der Öffnung 20 möglich ist, das Verhältnis von Frequenzänderung zu Längenänderung zu vergrößern. Damit kann die Messgenauigkeit bzw. Messauflösung erhöht werden, wobei der Messbereich bei vorgegebenem nutzbarem Frequenzbereich entsprechend kleiner wird. Die Messgenauigkeit kann kleiner als 20 nm, bevorzugt kleiner als 10 nm, sein. Man hat dann beispielsweise eine Form des Resonanzhohlraums 2, bei dem der Durchmesser der rotationssymmetrischen Wand 4 ausgehend von der Öffnung 20 in Richtung der Endplatte 6 abnimmt, beispielsweise einen Kegelstumpf, bei dem sich die Endplatte am kleineren Ende befindet, wie in Fig. 3 dargestellt. Die Ausführungsform, die auf Fig. 3 gezeigt wird, ist nicht Teil der Erfindung.

Fig. 5 stellt eine Aufsicht, d.h. in Längsrichtung wenn die Antenne eingebaut ist, auf eine Antenne 10 gemäß einer bevorzugten Ausführungsform dar. Die Antenne ist in ihrer Form (insbesondere im Hinblick auf eine Rotationssymmetrie) angepasst, eine Mode vom Typ TEOnp, bevorzugt vom Typ TE01p, weiter bevorzugt vom Typ TE011, anzuregen. In der Figur ist beispielhaft eine Antenne mit drei Armen gezeigt, es ist aber natürlich auch eine Antenne mit 2 oder 4 oder einer anderen Anzahl von Armen, oder auch einer anderen Formgebung, denkbar, wobei möglichst eine Rotationssymmetrie (bzgl. Drehungen um bestimmte Winkel) vorhanden sein sollte.

Fig. 6A und Fig. 6B stellen Resonanzhohlräume 2 mit nicht ebener Endplatte 6 in einem axialen Schnitt dar. In Fig. 6A ist die Endplatte 6 nach innen gekrümmt (also in den Resonanzhohlraum 2 hinein gebogen); in Fig. 6B ist die Endplatte 6 nach außen gekrümmt. Als rotationssymmetrische Wand 4 wurde in den Figuren 6A, 6B beispielhaft eine konische Form gewählt; es ist jedoch möglich, jede andere der oben genannten Konturen der rotationssymmetrischen Wand zu verwenden und mit einer gekrümmten Endplatte 6 zu kombinieren.

Fig. 9 stellt eine Ausführungsform der vorliegenden Erfindung dar, bei der weitere optionale Elemente gezeigt sind, die bereits vorstehend beschrieben wurden. Genauer gesagt sind diese Elemente das Filter bzw. das Anpassnetzwerk 26 und die dielektrische Abdeckung 24, welche unabhängig voneinander vorgesehen werden können. Die dielektrische Abdeckung 24 ist am offenen Ende 8 an der Öffnung 20 angeordnet, deckt diese ab und dient als Schutzschicht, wie bereits weiter oben beschrieben. Die dielektrische Abdeckung 24 ist auf geeignete Weise, bevorzugt abnehmbar, am offenen Ende 8 oder gegebenenfalls an dem Gehäuse 22 befestigt. Bei Verwendung der Messvorrichtung befindet sich die dielektrische Abdeckung zwischen Resonanzhohlraum 2 und der dielektrischen Schicht 16, deren Dicke zu bestimmen ist. Die Dicke der dielektrischen Abdeckung 24 ist also bei der Messung zu berücksichtigen. Das Filter bzw. das Anpassnetzwerk 26 ist in der Verbindung zwischen Antenne 10 und Reflexionsmessgerät 12 angeordnet, z.B. in der Nähe der Antenne oder mit der Antenne integriert (so dass eine Antenne mit Filter erhalten wird). Von diesen beiden zusätzlichen Merkmalen (dielektrische Abdeckung, Anpassnetzwerk) abgesehen stimmt die Ausführungsform der Fig. 9 mit derjenigen der Fig. 1 überein, entsprechend ist das im Zusammenhang mit Fig. 1 Gesagte hier ebenso gültig.

**Bezugszeichenliste**

| | |
|---|---|
| 2 | Resonanzhohlraum |
| 4 | rotationssymmetrische Wand |
| 6 | Endplatte |
| 8 | offenes Ende |
| 10 | Antenne |
| 12 | Reflexionsmessgerät |
| 14 | Auswerteschaltung |
| 16 | dielektrische Schicht |
| 18 | Substrat |
| 20 | Öffnung am offenen Ende des Resonanzhohlraums |
| 22 | Gehäuse |
| 24 | dielektrische Abdeckung |
| 26 | Anpassnetzwerk |
| 28 | Innenleiter mit integriertem Anpassnetzwerk |
| 30 | Außenleiter |
| 32 | Dielektrikum |
| $d_c$ | Cut-Off-Durchmesser |

**Patentansprüche**

1. Messvorrichtung zur Bestimmung einer Dicke einer dielektrischen Schicht (16) auf einem elektrisch leitfähigen Substrat (18), umfassend:

   einen Resonanzhohlraum (2) für elektromagnetische Felder, der eine rotationssymmetrische Wand (4) und eine Endplatte (6) gegenüber einem offenen Ende (8) aufweist, wobei der Resonanzhohlraum (2) angepasst ist, mit dem offenen Ende (8) auf der dielektrischen Schicht (16) auf dem Substrat (18) angeordnet zu werden, so dass das Substrat eine Wand des Resonanzhohlraums bildet, wobei in einem Bereich des Resonanzhohlraums (2) der Durchmesser der rotationssymmetrischen Wand (4) größer als der Cut-Off Durchmesser (dc) für zylindrische Hohlwellenleiter bei gegebener Betriebsfrequenz ist;

eine Antenne (10), die angepasst ist, ein elektromagnetisches Feld in dem Resonanzhohlraum anzuregen;

ein Reflexionsmessgerät (12), das mit der Antenne (10) verbunden ist und konfiguriert ist, mindestens eine Eigenschaft des elektromagnetischen Feldes im Resonanzhohlraum (2) zu ermitteln; und

eine Auswerteschaltung (14), die mit dem Reflexionsmessgerät (12) verbunden ist und konfiguriert ist, die Dicke der dielektrischen Schicht (16) aus der ermittelten mindestens einen Eigenschaft des elektromagnetischen Feldes zu bestimmen;

**dadurch gekennzeichnet, dass**

ein Durchmesser der rotationssymmetrischen Wand (4) in einer Längsrichtung des Resonanzhohlraums (2) von dem offenen Ende (8) zu der Endplatte (6) variiert, und

ein Durchmesser einer Öffnung (20) am offenen Ende (8) kleiner ist als der frequenzabhängige Cut-Off-Durchmesser ($d_c$) für zylindrische Hohlwellenleiter bei gegebener Betriebsfrequenz.

2. Messvorrichtung gemäß Anspruch 1, wobei die Antenne (10) innerhalb des Resonanzhohlraums (2) angeordnet ist.

3. Messvorrichtung gemäß Anspruch 2, wobei die Antenne (10) eine Form aufweist, die angepasst ist, eine Feldkonfiguration entsprechend einer Mode vom Typ TEOnp, bevorzugt vom Typ TE01p, weiter bevorzugt vom Typ TE011, anzuregen, wobei n und p natürliche Zahlen sind.

4. Messvorrichtung gemäß einem der vorstehenden Ansprüche, wobei eine Verbindung von der Antenne (10) mit dem Reflexionsmessgerät (12) ein Filter beinhaltet, das die Ausbreitung bestimmter Frequenzen unterdrückt oder unterstützt.

5. Messvorrichtung gemäß Anspruch 4, wobei das Filter ein Anpassnetzwerk (26) umfasst, das in koaxialer Bauweise und/oder in Mikrostreifentechnik ausgeführt ist.

6. Messvorrichtung gemäß Anspruch 4, wobei das Filter ein Anpassnetzwerk (26) mit einem Innenleiter (28) umfasst, der Abschnitte mit unterschiedlichen Durchmessern aufweist.

7. Messvorrichtung gemäß einem der vorstehenden Ansprüche, wobei die Antenne (10) in ein Keramiksubstrat eingebettet ist.

8. Messvorrichtung gemäß Anspruch 7, wobei der gesamte Resonanzhohlraum (2) mit dem Keramiksubstrat gefüllt ist und die rotationssymmetrische Wand (4) und die Endplatte (6) als Metallschichten außen auf das Keramiksubstrat aufgebracht sind.

9. Messvorrichtung gemäß einem der vorstehenden Ansprüche, wobei die Variation des Durchmessers der rotationssymmetrischen Wand (2) so angepasst ist, dass das elektromagnetische Feld eine Feldkonfiguration entsprechend einer Mode vom Typ TEOnp, bevorzugt vom Typ TE01p, weiter bevorzugt vom Typ TE011, aufweist, wobei n und p natürliche Zahlen sind.

10. Messvorrichtung gemäß einem der vorstehenden Ansprüche, wobei der Resonanzhohlraum (2) die Form eines Kegelstumpfes, eines Doppelkegelstumpfes, eines Zylinders kombiniert mit einem Kegelstumpf oder einer Kombination davon aufweist.

11. Messvorrichtung gemäß einem der vorstehenden Ansprüche, wobei die Form der rotationssymmetrischen Wand (4) durch Rotation einer Kurve höherer Ordnung beschrieben wird, bevorzugt durch einen Abschnitt eines Rotationshyperboloids oder eines Rotationsellipsoids.

12. Messvorrichtung gemäß einem der vorstehenden Ansprüche, wobei die Variation des Durchmessers der rotationssymmetrischen Wand (4) von dem offenen Ende (8) zu der Endplatte (6) stetig, bevorzugt glatt, verläuft.

13. Messvorrichtung gemäß einem der vorstehenden Ansprüche, wobei der Resonanzhohlraum (2) mit einem Dielektrikum gefüllt ist.

14. Messvorrichtung gemäß einem der vorstehenden Ansprüche, wobei die rotationssymmetrische Wand (4) mit einem Material hoher Leitfähigkeit beschichtet ist, bevorzugt mit Silber, Gold oder Kupfer.

15. Messvorrichtung gemäß einem der vorstehenden Ansprüche, weiterhin umfassend eine dielektrische Abdeckung (24), welche die Öffnung (20) am offenen Ende (8) abdeckt.

## Claims

1. A measuring device for determining a thickness of a dielectric layer (16) on an electrically conductive substrate (18) comprising:

   a resonance cavity (2) for electromagnetic fields which has a rotationally symmetrical wall (4) and an end plate (6) opposite an open end (8), wherein the resonance cavity (2) is adapted to be positioned with the open end (8) on the dielectric layer (16) on the substrate (18), so that the substrate creates a wall of the resonance cavity, wherein the diameter of the rotationally symmetrical wall (4) is greater than the cut-off diameter (dc) for cylindrical hollow waveguides at a given operating frequency in a region of the resonance cavity (2);
   an antenna (10) which is adapted to excite an electromagnetic field in the resonance cavity;
   a reflection measuring device (12) which is connected to the antenna (10) and is configured to determine at least one property of the electromagnetic field in the resonance cavity (2); and
   an evaluation circuit (14) which is connected to the reflection measuring device (12) and configured to determine the thickness of the dielectric layer (16) from the at least one determined property of the electromagnetic field;

   **characterized in that**

   a diameter of the rotationally symmetrical wall (4) varies in a longitudinal direction of the resonance cavity (2) from the open end (8) to the end plate (6), and
   a diameter of an opening (20) is smaller at the open end (8) than the frequency-dependent cut-off diameter $(d_c)$ for cylindrical hollow waveguides at a given operating frequency.

2. The measuring device according to claim 1, wherein the antenna (10) is arranged within the resonance cavity (2).

3. The measuring device according to claim 2, wherein the antenna (10) has a shape that is adapted to excite a field configuration corresponding to a mode of type TEOnp, preferably of type TE01p, more preferably of type TE011, wherein n and p are natural numbers.

4. The measuring device according to one of the preceding claims, wherein a connection of the antenna (10) to the reflection measuring device (12) includes a filter that suppresses or supports the propagation of certain frequencies.

5. The measuring device according to claim 4, wherein the filter comprises a matching network (26) which is performed in coaxial design and / or in micro-strip technology.

6. The measuring device according to claim 4, wherein the filter comprises a matching network (26) having an internal conductor (28) which has portions with different diameters.

7. The measuring device according to one of the preceding claims, wherein the antenna (10) is embedded in a ceramic substrate.

8. The measuring device according to claim 7, wherein the entire resonance cavity (2) is filled with the ceramic substrate and the rotationally symmetrical wall (4) and the end plate (6) are applied to the outside of the ceramic substrate as metal layers.

9. The measuring device according to one of the preceding claims, wherein the variation in the diameter of the rotationally symmetrical wall (2) is adapted in such a manner that the electromagnetic field has a field configuration corresponding to a mode of type TEOnp, preferably of type TE01p, further preferably of type TE011, wherein n and p are natural numbers.

10. The measuring device according to one of the preceding claims, wherein the resonance cavity (2) has the shape of a truncated cone, a double truncated cone, a cylinder combined with a truncated cone or a combination thereof.

11. The measuring device according to one of the preceding claims, wherein the shape of the rotationally symmetrical wall (4) is described by rotation of a curve of higher-order, preferably by a portion of a rotational hyperboloid or a rotational ellipsoid.

12. The measuring device according to one of the preceding claims, wherein the variation in the diameter of the rotationally symmetrical wall (4) from the open end (8) to the end plate (6) runs continuously, preferably smoothly.

13. The measuring device according to one of the preceding claims, wherein the resonance cavity (2) is filled with a dielectric.

14. The measuring device according to one of the preceding claims, wherein the rotationally symmetrical wall (4) is coated with a highly conductive material, preferably with silver, gold or copper.

15. The measuring device according to one of the preceding claims, further comprising a dielectric cover (24) which covers the opening (20) at the open end (8).

**Revendications**

1. Dispositif de mesure pour déterminer une épaisseur d'une couche diélectrique (16) sur un substrat électro-conducteur (18) comprenant :

   un cavité résonante(2) pour des champs électromagnétiques, qui comportent une paroi symétrique en rotation (4) et une plaque d'extrémité (6) par rapport à une extrémité ouverte (8), sachant que la cavité résonante (2) est adaptée pour être disposée sur le substrat avec l'extrémité ouverte (8) sur la couche diélectrique (16) de telle manière que le substrat (18) forme une paroi de la cavité résonante, sachant que dans une zone de la cavité résonante(2), le diamètre de la paroi symétrique en rotation (4) est plus grand que le diamètre de coupure (dc) pour des guides d'onde creux à une fréquence de fonctionnement donnée ;
   une antenne (10), qui est adaptée pour exciter un champ électromagnétique dans la cavité résonante ;
   un appareil de mesure par réflexion (12), qui est relié à l'antenne (10) et est configuré pour déterminer au moins une propriété du champ électromagnétique dans la cavité résonante(2) ; et
   un circuit d'évaluation (14), qui est relié à l'appareil de mesure par réflexion (12) et est configuré pour déterminer l'épaisseur de la couche diélectrique (16) au moins à partir de la propriété déterminée du champ électromagnétique ;
   **caractérisé en ce qu'**
   un diamètre de la paroi symétrique en rotation (4) varie dans une direction longitudinale de la cavité résonante (2) de l'extrémité ouverte (8) vers la plaque d'extrémité (6), et
   un diamètre d'une ouverture (20) à l'extrémité ouverte (8) est plus petit que le diamètre de coupure fonction de la fréquence ($d_c$) pour des guides d'onde creux à une fréquence de fonctionnement donnée.

2. Dispositif de mesure selon la revendication 1, sachant que l'antenne (10) est disposée à l'intérieur de la cavité résonante (2).

3. Dispositif de mesure selon la revendication 2, sachant que l'antenne (10) comporte une forme qui est adaptée pour exciter une configuration de champ correspondant à un mode de type TEOnp, de préférence de type TE01p, davantage de préférence de type TE011, sachant que n et p sont des nombres naturels.

4. Dispositif de mesure selon l'une quelconque des revendications précédentes, sachant qu'une liaison de l'antenne (10) à l'appareil de mesure de réflexion (12) contient un filtre, qui supprime ou soutient l'élargissement de certaines fréquences.

5. Dispositif de mesure selon la revendication 4, sachant que le filtre comprend un réseau d'adaptation (26), qui est exécuté en mode de conception coaxial et/ou en technique de microbandes.

6. Dispositif de mesure selon la revendication 4, sachant que le filtre comprend un réseau d'adaptation (26) avec un conducteur intérieur (28), qui comporte des sections avec des diamètres différents.

7. Dispositif de mesure selon l'une quelconque des revendications précédentes, sachant que l'antenne (10) est intégrée dans un substrat céramique.

8. Dispositif de mesure selon la revendication 7, sachant que toute la cavité résonante (2) est remplie de substrat céramique et la paroi symétrique en rotation (4) et la plaque d'extrémité (6) sont appliquées extérieurement sur le substrat céramique en tant que couches métalliques.

9. Dispositif de mesure selon l'une quelconque des revendications précédentes, sachant que la variation du diamètre de la paroi symétrique en rotation (2) est adaptée de telle manière que le champ électromagnétique comporte une configuration de champ correspondant à un mode de type TEOnp, de préférence de type TE01p, davantage de préférence de type TE011, sachant que n et p sont des nombres naturels.

10. Dispositif de mesure selon l'une quelconque des revendications précédentes, sachant que la cavité résonante (2) comporte la forme d'un tronc de cône, d'un tronc de cône double, d'un cylindre, combiné à un tronc de cône ou d'une combinaison de ceux-ci.

11. Dispositif de mesure selon l'une quelconque des revendications précédentes, sachant que la forme de la paroi symétrique en rotation (4) est décrite par la rotation d'une courbe d'ordre élevé, de préférence par une section d'un hyperboloïde de rotation ou d'un ellipsoïde de rotation.

12. Dispositif de mesure selon l'une quelconque des revendications précédentes, sachant que la variation du diamètre de la paroi symétrique en rotation (4) passe de l'extrémité ouverte (8) à la plaque d'extrémité (6), de façon continue, de préférence de façon lisse.

13. Dispositif de mesure selon l'une quelconque des revendications précédentes, sachant que la cavité résonante (2) est remplie d'un diélectrique.

**14.** Dispositif de mesure selon l'une quelconque des revendications précédentes, sachant que la paroi symétrique en rotation (4) est revêtue d'un matériau d'une conductibilité élevée, de préférence d'argent, d'or ou de cuivre.

**15.** Dispositif de mesure selon l'une quelconque des revendications précédentes, comprenant en plus une couverture diélectrique (24), laquelle couvre l'ouverture (20) à l'extrémité ouverte (8).

Fig. 1

Fig. 2A    Fig. 2B    Fig. 2C    Fig. 2D

Fig. 3

Fig. 7

$d_2 > d_c$

$d_c$

$d_1 < d_c$

Fig. 4

Fig. 5

Fig. 8

Fig. 6A

Fig. 6B

Fig. 9

**IN DER BESCHREIBUNG AUFGEFÜHRTE DOKUMENTE**

**In der Beschreibung aufgeführte Patentdokumente**

- EP 2620741 A1
- US 20090278552 A1
- JP 2009278346 A
- DE 202009012483 U1

**In der Beschreibung aufgeführte Nicht-Patentliteratur**

- Cylindrical TE011/ TM111 Mode Control by Cavity Shaping. **HERBERT L. THAL.** IEEE Transactions on Microwave Theory and Techniques. Plenum, 01. Dezember 1979, 982-986